# EUROPEAN PATENT SPECIFICATION

(11) **EP 4 262 269 B1**
(45) Date of publication and mention of the grant of the patent: **17.09.2025**
(21) Application number: 22305550.0
(22) Date of filing: 14.04.2022
(51) Int. Cl.: H04W 28/02

(54) **URSP UPDATE IN BORDER SCENARIO**
URSP-AKTUALISIERUNG IM GRENZ-SZENARIO
MISE À JOUR SUR L'URSP DANS LE SCÉNARIO À LA FRONTIÈRE

(43) Date of publication of application: 18.10.2023
(73) Proprietor: Mitsubishi Electric R&D Centre Europe B.V., 1119 NS Schiphol Rijk Amsterdam (NL); MITSUBISHI ELECTRIC CORPORATION, Chiyoda-ku Tokyo 100-8310 (JP)
(72) Inventor: KHANFOUCI, Mourad, 35708 RENNES CEDEX 7 (FR)
(74) Representative: Plasseraud IP

(56) References cited:
- WO-A1-2021/049782
- WO-A1-2021/067140
- US-A1- 2022 086 218

## Description

The present disclosure relates to service continuity of a telecommunication application in a border scenario (i.e. when a terminal crosses a border).

The service continuity is an important requirement for the design of edge network architecture, for instance when a terminal chip is implanted in a vehicle for so-called V2X applications (where "V2X" stands for *"Vehicle-to-Everything"* and aims at various telecommunication services made available for users of that vehicle: data, voice, video, etc.).

Service continuity from the perspective of such applications can be viewed as the "handover" in GSM communications, when the vehicle crosses a boarder, for instance between two different countries.

A communicating user equipment ("UE" hereafter), for example in the form of a telecommunication chip, can be implanted in a vehicle to implement V2X applications. A telecommunication context of a current application involving a V2X UE is transferred from the source edge application server to a target application server located in the new country, following the mobility of the V2X UE.

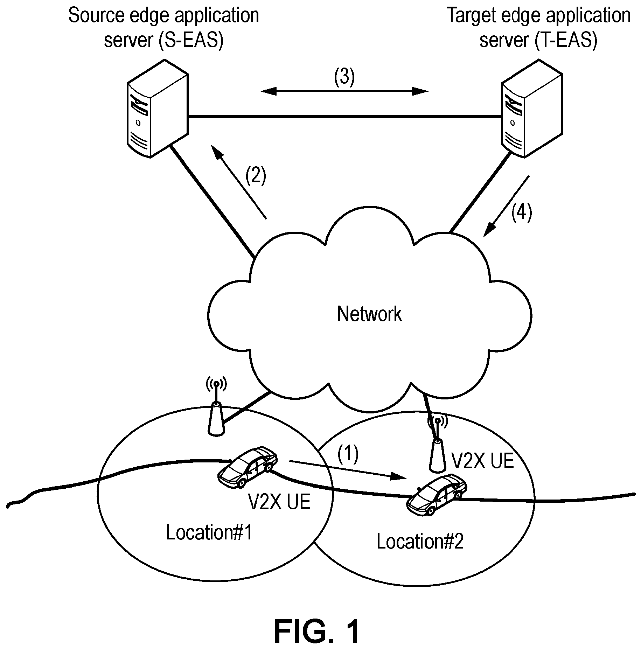

The general problem of the service continuity of the application is described by figure 1 showing two edge application servers (EAS) that are serving two locations (for example two different countries). Source EAS (S-EAS) is serving the V2X UEs located in location#1 while target EAS (T-EAS) is serving the V2X UEs located in location #2.

When the V2X UE is moving from location #1 to location #2, the latency requirement of the S-EAS is no longer maintained and the V2X application should be relocated to a closer EAS in order to maintain the latency of the application.

The present disclosure aims to improve the situation.

The scope of the invention is defined by the appended claims. Further embodiments of the invention are defined by the dependent claims.

It proposes a method to assist a roaming of a user equipment from a first network to a second network, said first and second networks being located in respective regions separated by a border,
the method comprising, upon detection of a crossing of said border by the user equipment, a use by the second network of application layer information to handle an application layer of a roaming of the user equipment from the first network to the second network,
wherein the user equipment transmits to at least one of said first and second networks a signal according to which it belongs to a specific class of user equipment being supported by a federation of networks including at least the first and second networks, so as to update a route selection policy of the user equipment being defined as belonging to said specific class,
said updated route selection policy being used by the second network to handle said application layer for the roaming of the user equipment, said roaming being thereby seamless for the user equipment.

In an embodiment, prior to the border crossing, unified data repositories of the first and second networks are updated and registered with identifiers of user equipment belonging to said specific class. A user equipment belonging to said specific class is therefore detected and identified when crossing said border, based on at least one of said unified data repositories.

In an embodiment, prior to the border crossing, at least one node of one of the first and second networks is predefined and registered as a federation node, and the first network transmits the application layer information to the federation node, to update the route selection policy of the user equipment with federation related information.

The federation node can use then at least one of said unified data repositories to detect the user equipment as belonging to said specific class.

The federation node can be a multi-access edge computing node (MEC node) that is deployed between the first and the second network.

Moreover, complementarily or alternatively, a federation node intervening in the roaming can be a PCF node of the second network, "PCF" relating to a "Policy Control Function".

Moreover, complementarily or alternatively, a federation node intervening in the roaming can be an SMF node of the second network, "SMF" relating to "session management function", typically for a seamless application session roaming.

In an embodiment:
- prior to said roaming and when the user equipment is attached to the first network, upon reception by the first network of said signal of the user equipment belonging to the specific class, the first network updates the route selection policy of the user equipment to define the user equipment as belonging to said specific class,
- during said roaming, the first network triggers an establishment of a federated policy control function node and unified data repository with the second network by transmitting said application layer information to the federated policy control function node (S2), said federated policy control function node being delegated for updating the route selection policy of the user equipment in the second network and for updating a unified data repository of said second network,
- when the user equipment attaches to the second network, the second network uses said updated unified data repository of said second network to detect the user equipment as belonging to said specific class and uses said application layer information and said updated route selection policy of the user equipment in the second network, to handle the roaming for said user equipment.

In this embodiment, a federated policy control function layer is implemented by delegating said federated policy control function node.

The federated policy control function node can be a multi-access edge computing node belonging to the second network typically and located near said border.

The method according to the present disclosure is advantageous notably when the first and second networks are located in distinct respective countries. In this case, even when crossing the border between these countries the roaming is seamless and for example application sessions being implemented by a user equipment can continue without interruption when crossing the border.

In an example of embodiment, the user equipment can be implanted in a vehicle to implement V2X applications, "V2X" relating to "vehicle to everything" applications. Typically, several user equipment can be implanted in a same vehicle, or several vehicles following each other, these user equipment being then considered as a peloton of user equipment being members of the federation and to be processed all together for example.

The present disclosure aims also at a computer program comprising instructions causing the implementation of the method presented above when said instructions are executed by a processing circuit. It aims also at a non-transitory computer storage medium storing such instructions.

It aims also at a system to assist a roaming of a user equipment from a first network to a second network, said first and second networks being located in respective regions separated by a border, comprising said user equipment and said first and second networks, said user equipment and said first and second networks being configured for performing the method as presented above.

In an embodiment, such a system can further comprise a federation manager computer entity to store unified data repositories of said first and second networks with identifiers of user equipment belonging to said specific class, to implement the specific method presented above and involving unified data repositories.

In this embodiment, this federation manager computer entity can store data of at least one node of one of said first and second networks to be considered as a federation node, as presented above.

The present disclosure aims also at a user equipment of such a system.

Other features, details and advantages will be shown in the following detailed description and on the figures, on which:
- figure 1 shows a usual management to attempt service continuity for V2X edge applications,
- figure 2 presents schematically a context allocation in border scenario,
- figure 3 shows an example of embodiment of a method to handle the roaming according to the present disclosure,
- figure 4 shows a current URSP update in a usual border scenario,
- figure 5 shows a URSP update as proposed by the present disclosure, with a federation management,
- figure 7 shows new signalling messages exchanged especially via interface N24, between PCF nodes in the context of the present disclosure, to be compared with the usual communications over same interface N24 presented in figure 6,
- figure 9 shows new signalling messages exchanged especially via interface N16, between SMF nodes in the context of the present disclosure, to be compared with the usual communications over same interface N16 presented in figure 8,
- figure 10 presents different entities intervening in a 5G network architecture (from 3GPP TS 23.501).

The present disclosure proposes to build a roaming framework that allows the update of the route selection policy of a user equipment (noted "UE" hereafter) roaming from home public land mobile network (noted "H-PLMN") to a visiting public land mobile network (V-PLMN).

The update of the UE Route Selection Policy (URSP) is performed in the visiting Policy Control Function (PCF) for this UE, so as to improve the latency of the reconfiguration of the application layer and integrate the application layer roaming into the standard roaming procedure.

The URSP update, made in advance for a given UE (before an effective border location of that UE) lies on the principle of building a federation of public land mobile networks (PLMNs) at the border between at least two countries such that the application layer handling is harmonized between the home and the visiting PLMNs.

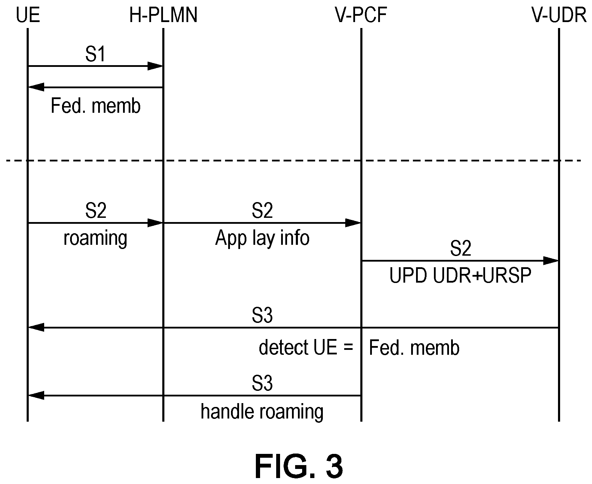

Referring to figure 3, the following steps can then be implemented:
S1- Prior to the roaming, the home PLMN updates the URSP of the UE in order to define the UE as a "federation member",
S2- When the UE is roaming, the home PLMN triggers the establishment of a federated PCF and a UDR (Unified Data Repository, as detailed below) with the visited PLMN by transmitting application layer information to the visiting PCF:
   a) Federated PCF is established through the delegation of the update of the URSP to the visiting PCF and updates the UDR accordingly,
   b) Federated PCF layer can be implemented by delegating to some specific MEC node in the border that is used to update the URSP with specific federation related information.
   "MEC" stands for "Multi-access Edge Computing" (or formerly "Mobile Edge computing"), a MEC node designating then a network node located near the border.
S3- When the UE attaches to the v-PLMN, the visiting UDR is used for detecting the UE as a federation member and the v-PLMN uses the application layer information and the v-PLMN policy in order to handle application layer of the roaming UE. The UE experiences a continuity of service without any interruption due to the border scenario.

In an embodiment, it is proposed to build a federated policy layer in order to facilitate the update of the URSP when UE is roaming from the home PLMN to the visiting PLMN. This URSP update is viewed as a trigger for the improvement of the application layer roaming during the border crossing scenario. The URSP is performed in the home PCF at first (prior to the roaming as such) because the subscription information for the involved UEs are stored in the unified data management node (UDM) and the unified data repository node (UDR).

Before detailing this embodiment, reference is made again to figure 1 to describe at first how the application layer transfer is performed in a 5G system according to the prior art.

The following general procedure is used for the application relocation, according to the prior art (and its terminology presented above):
- Arrow (1): A V2X UE is moving from location #1 to location #2.
- Arrow (2): this event (1) is notified to a source-EAS (Edge Application Server).
- Arrow (3): the source-EAS or the application orchestrator decides to relocate the V2X application to a target-EAS. The source-EAS transmits the application context to the target-EAS.
- Arrow (4): the target-EAS notifies the network and the source-EAS of the finalization of the application context relocation (arrows (3) and (4) of figure 1).

For the border scenario, it is assumed that the network that is connecting the source-EAS and the target-EAS is a network of two different Mobile Network Operators (MNO). The network of each MNO is formed of:
- an access layer,
- a core network and multi-access edge computing layer (MEC) that is formed by an edge platform and edge orchestration and management layer.

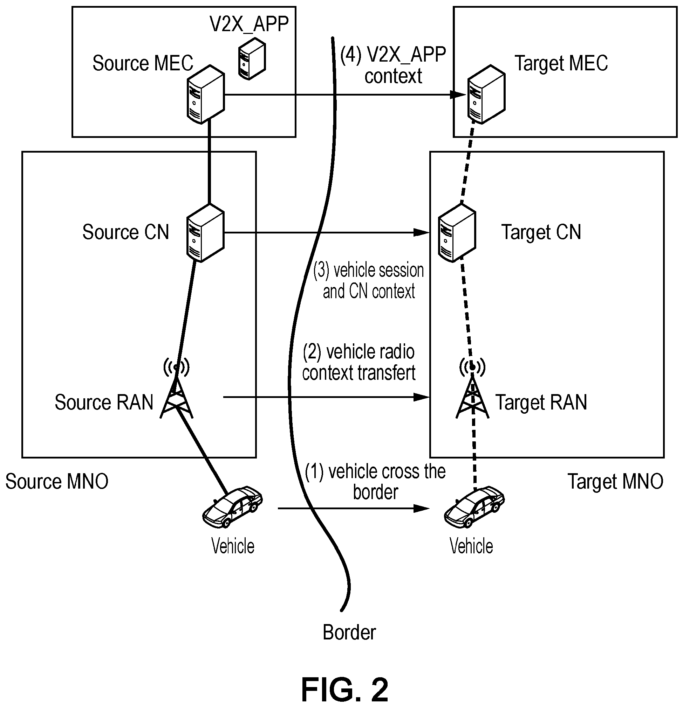

When a vehicular UE is moving from source to target MNO networks as shown in event (1) of figure 2 showing the same prior art situation, different information is relocated from the source MNO network to the target MNO network.

Referring now to figure 2 (where CN and RAN designate Core Network and Radio Access Network), in steps (2) and (3), information related to vehicle subscription information, vehicle session status context information and vehicle access network context information is transmitted. After the roaming, i.e. step (2) and step (3), the V2X application context is transferred between the two multi-access edge servers (source MEC and target MEC).

UE route selection policy ("URSP") is an important policy function that is used by the UE to determine how to route outgoing traffic. Traffic can:
- be routed to an established PDU Session ("Protocol Data Unit"),
- or be offloaded to non-3GPP access, outside a PDU Session,
- or can trigger the establishment of a new PDU Session.

Some main URSP rules are presented below as well as the application function (AF) guidance for the URSP update.

Each URSP rule contains a list of Route Selection Descriptors containing one or multiple Route Selection Descriptors each having a different Route Selection Descriptor Precedence value.

The structure of the URSP does not define how the PCF splits the URSP when URSP cannot be delivered to the UE in a simple message such as a single NAS message for example (Non-Access Stratum). It is expected that UE applications will not be able to change or override the PDU Session parameters in the URSP rules. A UE application can express preferences when it requests a network connection (e.g. certain connection capabilities), which can be mapped into specific PDU Session parameters by the URSP rules.

In the case of network rejection of the PDU Session Establishment Request, the UE may trigger a new PDU Session establishment based on the rejection cause and the URSP policy. When the PCF provisions URSP rules to the UE, one URSP rule with a "match all" Traffic descriptor may be included.

The URSP rule with the "match all" Traffic descriptor is used to route the traffic of applications which do not match any other URSP rules and shall therefore be evaluated as the last URSP rule, i.e. with lowest priority. There shall be only one Route Selection Descriptor in this URSP rule. The Route Selection Descriptor in this URSP rule includes at most one value for each Route Selection Component.

Application function (AF) can provide guidance for the determination of the URSP and the following mechanism is used in usual standard specifications as presented below.

The AF can provide guidance for URSP determination to 5G system via the network exposure function (NEF). The AF may belong to the operator or to an external party. The PCF is in the home PLMN as it is the PCF that determines the URSP for the UE.

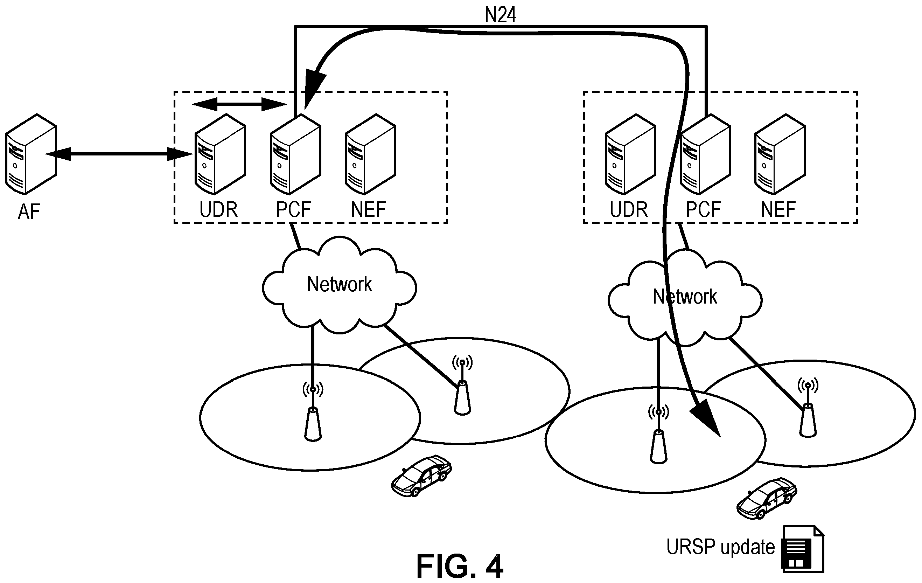

The home PCF is updating the URSP at first, because the UEs are identified uniquely in the home PLMN by internal identifiers provided by the unified data management (UDM) nodes. The couple network exposure function (NEF) and unified data repository (UDR) is used to secure and route the AF request to the relevant UEs in the system, as shown as an illustration in figure 4, where reference N24 designates a reference point (an interface in other words) between the PCF node in the visited network and the PCF node in the home network as indicated for example in the standard specification ETSI TS 123 501 V15.3.0 (2018-09) in page 28 (3GPP TS 23.501 version 15.3.0 Release 15). In this view, a new signaling over the current roaming interface N24 between home and visiting PCF nodes can be implemented in the present disclosure.

In the border scenario, i.e. when the UE is roaming from home to visited PLMN, the update of URSP is usually performed in the home PCF which may increase the latency of the reconfiguration at the application layer and thus may complicate the seamless roaming, for example in a platooning scenario involving several interconnected user equipment and crossing the border together. Indeed, the URSP update procedure according to the prior art is relatively slow and may cause problems in case of session and service continuity SSC mode parameter or to change the DNN for the application function.

It is proposed a solution to this problem by the means of allowing the update of the URSP in the visited PLMN and especially the visited PCF and developing the overall architecture related to this update.

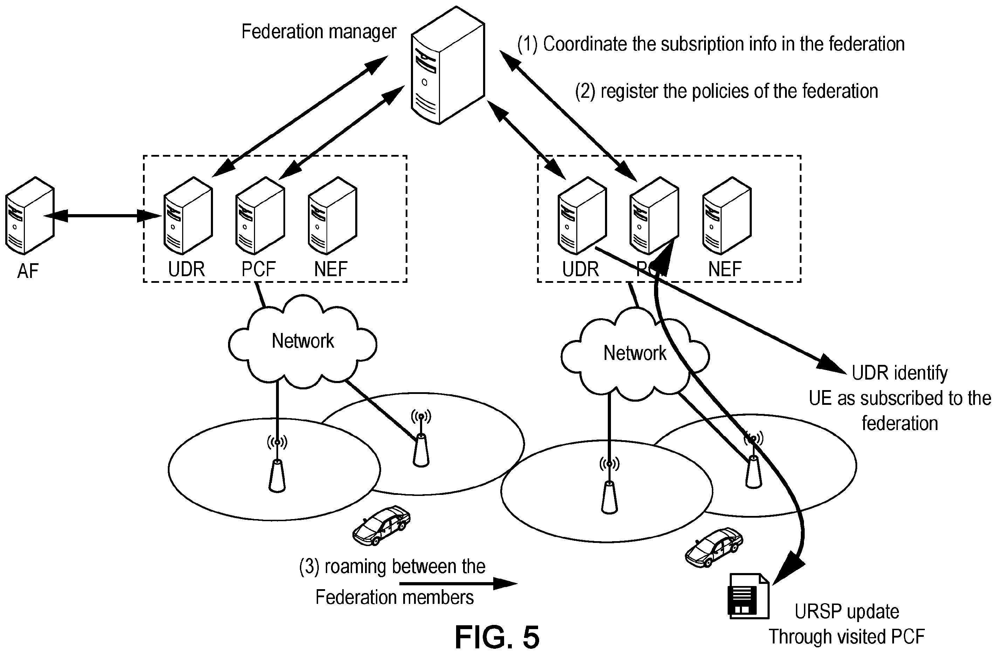

It is proposed here to build a federation framework at the border in order to provide a reconfiguration of URSP for specific UEs. The general description of the federation framework is described in the figure 5.

Prior to an actual border crossing, the core networks register to a supervising entity labelled "federation manager" in figure 5. More specifically, the UDR of the home and visited coordinated internal identification rules are stored in the federation manager for specific UEs present in the federation. Next, involved PCF nodes are registered to the federation manager in order to harmonize the policies for the federation members. This harmonization of the policies and traffic steering is implemented before the roaming. The harmonization can be defined for example according to a particular agreement between the respective networks managers.

Then, when one of these specific UEs is roaming to the visiting network, it is identified by the visiting UDR as a UE that is roaming from a federated network and if the UE is detected as a federated UE (one of the aforesaid "specific" UEs), then the visiting PCF can update its URSP. Typically, in the example of figure 5, the detection of the UE roaming (arrow (3)) launches:
- The identification by the visiting network's UDR of the UE as a federated UE, and
- Consequently, an URSP update in the UE through the visited PCF, seamlessly for the UE.

This UE identification can be done by means of transmitting application layer parameters that were used in the home PLMN. These parameters are used by the visiting PLMN to identify the home PLMN as member of the federation and to allow for jointly application relocation and roaming for the UE. This implementation can speed up and integrate the application layer roaming with the core network signalling by the means of a federated architecture in the border as presented in figure 5, while in the prior art implementation, the update in the visiting network was controlled by the policy of the home network involving then latency.

The following relates to new signalling introduced by the method presented above.

The N24 interface is the interface between the visiting policy control function (V-PCF) and home policy control function (H-PCF). The interface is standardized in the specification TS 29.513 and is responsible of forwarding between the PCF entities the following information:
- Policy association, update and medication between the roaming UE and the access and mobility function (AMF) in the visiting network. This association is forwarded by the visiting PCF to home PCF and the decision that is related to the policy association is performed in H-PCF,
- Authorization and provisioning of the UEs with specific QoS profiles that are forwarded from visiting PCF to home PCF. The decision of the authorisation is performed by the home PCF.

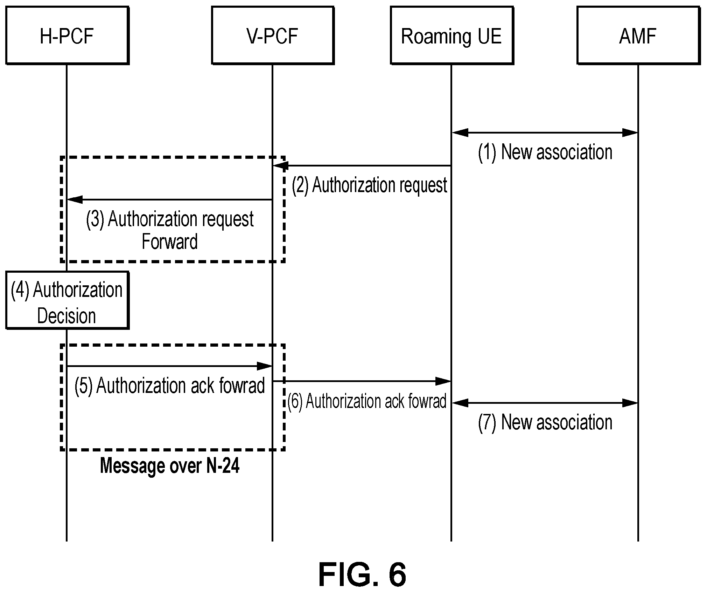

Usual simplified communications over the interface N24 are shown in figure 6.

The method according to the present description proposes hereafter a modification to the signalling when federations of networks are considered. In this case, all the previous policy control decisions are performed in the visiting PCF and a new message is transmitted over interface N24 in order to delegate the policy control rules from the home PCF to the visiting PCF. This new message may include an information about the UEs concerned by this particular PCF processing or is obtained by a new identification of the roaming UEs in the visiting PCF, defining a UE that is having home network in the federation.

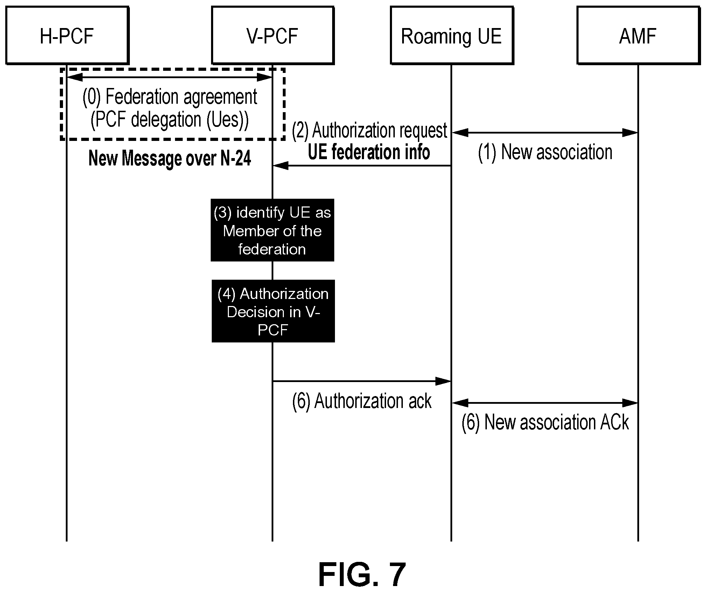

The overall new time diagram is provided in figure 7 with a new signalling over interface N24 shown in boxes (3) and (4) as well as new processing in the different nodes, to be compared of course with figure 6.

It is proposed also hereafter a coordination of session management function (SMF) when the UE is roaming from the home PLMN to visiting PLMN. This coordination is based on adding new messages over the N16 interface between home SMF and visiting SMF. The N16 interface is standardized in the 3GPP specification TS 29.502. The information transmitted over interface N16 are essentially related to traffic handling of the roaming UE. One example of this information is for example
- Routing information of the user plan function (UPF) of the communication network towards edge application server,
- Binding rules between the QoS flow associated to a specific session of the roaming UE in the visiting core network,
- Session management context transfer during roaming between Home and visiting SMF.

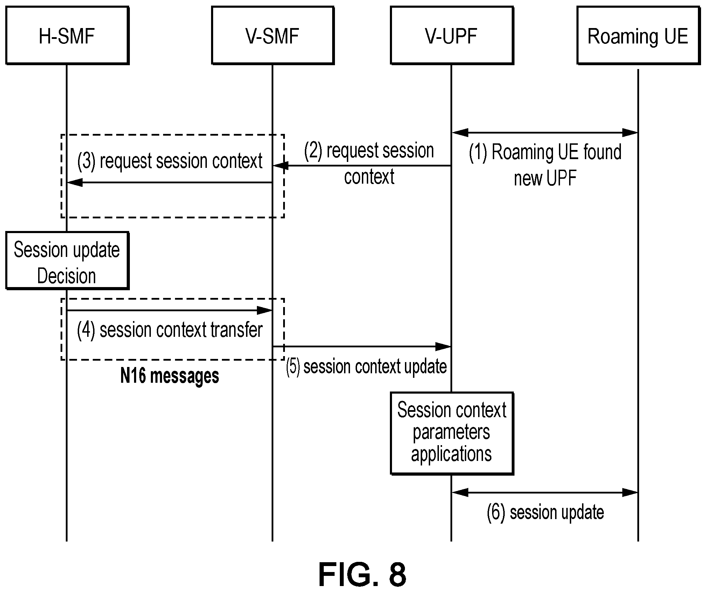

The usual call flow for interface N16 according to the prior art is provided in figure 8.

In a similar way to the previous PCF coordination, it is proposed also that the session update decision is performed at the visiting SMF and that the session context handling should be normalized between the UEs that are members of federated networks. This normalized session context handling could be for example:
- same edge application server for all the UEs that are members of the federation, preconfigured routing at the user plan function (UPF) for all the UEs,
- Same QoS handling for packets that are belonging to the UEs that are members of the federation,

Typically, such a QoS handling can be for example priority level of the packets, and/or maximum data burst volume, etc.

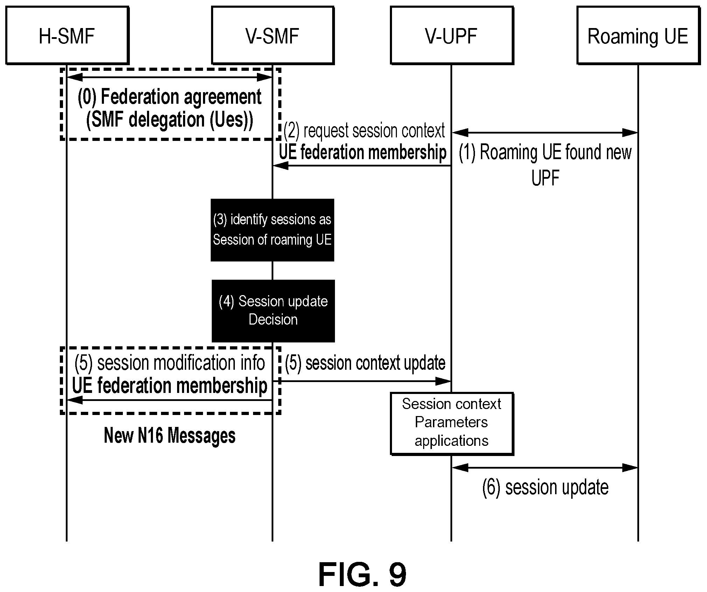

The modification to the signalling flow over interface N16 is provided in the figure 9 where new messages and information are added in boxes (3) and (4) typically.

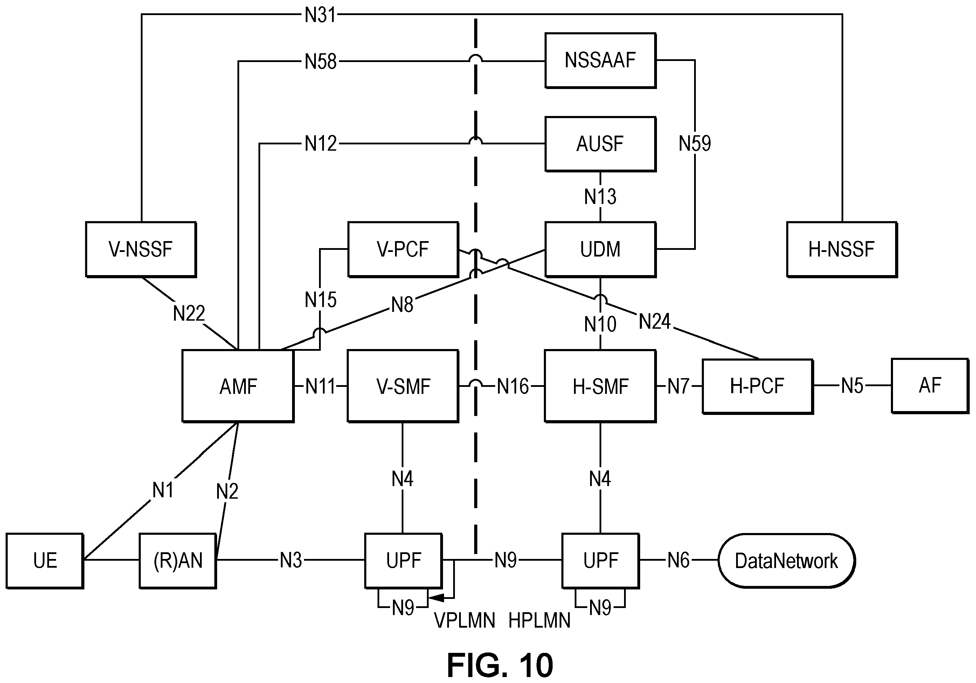

For the sake of completeness, figure 10 recalls a 5G network architecture (from 3GPP TS 23.501), showing different entities intervening in the description given above.

More details are given below relatively to the messages transmitted through interfaces N24 and N16.

These messages of delegation between the two networks allow the update of the URSP, and can also help to identify the UE members of the federation.

Relatively to usual operator federations in GSMA (open platform group), it is proposed here lower level federations with stronger coordination of sessions and quality of service (QoS) between networks. GSMA OPG is a platform that usually coordinates applications and does not consider the QoS conditions of each network. The networks manage to provide service as best they can without guaranteeing QoS.

A new message over N24 interface between home PCF and visiting PCF delegates the policy control function of the home PCF to the visiting PCF for a UE identified as a member of the federation. This policy control may be for example:
- Identification of the UEs that are members of the federation,
- Update of the UE route selection policy URSP for the UEs that are members of the federation,
- Authorization of the UEs that are members of the federation to register and/or to access to a mobility node (AMF) in the visiting PLMN,
- Indication of the MEC node identifier (data network identifier) that should be considered for the update of the UE route selection policy,
- The indication of the session QoS parameters that was recently setup by the home PCF.

After receiving the new message via N24 interface, the visiting PCF can:
- Identify the UEs that are members of the federation through:
   o The indication of the UEs federation membership received by the home PCF based on the new message,
   o The indication of the UE federation membership received from the URSP of the UE when attaching to the visiting PLMN,
- Apply policy control for the identified UEs as:
   o Providing authorization for the identified UEs to access to the visiting core network nodes,
   o Updating of the UE route selection policy for the UEs identified as members of the federation,
   o Updating QoS parameters of the communications of the UEs identified as members of the federation,
   o Updating the MEC node identification for the UEs identified as members of the federation.

Another new message transmitted via N16 interface connects the session management functions (SMFs) in home PLMN and visiting PLMN. It is proposed also a new message that may be used to identify the federation membership of the UE that is between the user plan function and the visiting session management function (V-SMF).

Currently over the N16 interface, usual messages are related to the control of the session during the roaming over the border. The session control messages:
- Configure the visiting SMF as intermediate SMF (I-SMF) for the session that is ongoing during the roaming,
- Transmit relevant session information such as session type (IP, ethernet, etc.) and quality of service routing information and session continuity mode (one or multiple sessions per roaming UE),
- Provide information to trigger the configuration/reconfiguration of the session at the visiting PLMN network.

For example, figure 8 shows an example where a session for the roaming UE is updated in the visiting network. In this case, the visiting SMF (V-SMF) is relaying the information to the home SMF (H-SMF) and the session update decision is performed at the H-SMF. It is thus proposed here to add a new delegation message for the session management over N16 where the session management for the ongoing session of the UE identified as members of the federation is delegated from H-SMF to V-SMF through a new message that includes:
- Session context that could be for example, the session type, session 5G quality of service identifier (5QI) that is related to the flows of the session,
- Identification of the roaming UEs and mapping of the roaming UEs to the corresponding session context,
- Additional information such as the forwarding action rules (FAR) that are used to forward the packets in the user plan function of the home PLMN. These rules can help maintaining the session level continuity of the sessions of UEs identified as federation members.

Similarly to the description of the signaling over N24, the session update and modification actions are delegated from the H-SMF to the V-SMF.

It is worth to note here a main difference in the level of cooperation, compared to the usual state of the art application platform as described in GSMA open platform group that is currently developing requirements for cooperative deployment of applications among federation of operators. In the state of the art, the operator platform is considered as an over the top (OTT) application layer that does not manage the actual policy and QoS of the networks. In other words, the networks are performing best effort cooperation for the roaming UEs. The present disclosure rather proposes here a low level cooperation where the actual QoS is maintained between the H-PLMN and the V-PLMN.

Moreover, the GSMA application platform according to the state of the art does not consider the UE route selection policy update for the application level cooperation which may cause service interruption and frequent service reconfiguration at the border.

## Claims

1. A method to assist a roaming of a user equipment from a first network to a second network, said first and second networks being located in respective regions separated by a border,
the method comprising, upon detection of a crossing of said border by the user equipment, a use by the second network of application layer information to handle an application layer of a roaming of the user equipment from the first network to the second network,
wherein the user equipment transmits to at least one of said first and second networks a signal according to which it belongs to a specific class of user equipment being supported by a federation of networks including at least the first and second networks, so as to update a route selection policy of the user equipment being defined as belonging to said specific class,
said updated route selection policy being used by the second network to handle said application layer for the roaming of the user equipment, said roaming being thereby seamless for the user equipment,
and wherein:
- prior to said roaming and when the user equipment is attached to the first network, upon reception by the first network of said signal of the user equipment belonging to the specific class, the first network updates the route selection policy of the user equipment to define the user equipment as belonging to said specific class (S1),
- during said roaming, the first network triggers an establishment of a federated policy control function node and unified data repository with the second network by transmitting said application layer information to the federated policy control function node (S2), said federated policy control function node being delegated for updating the route selection policy of the user equipment in the second network and for updating a unified data repository of said second network,
- when the user equipment attaches to the second network, the second network uses said updated unified data repository of said second network to detect the user equipment as belonging to said specific class (S3), and uses said application layer information and said updated route selection policy of the user equipment in the second network, to handle the roaming for said user equipment.

2. The method according to claim 1, wherein, prior to said border crossing, unified data repositories of said first and second networks are updated and registered with identifiers of user equipment belonging to said specific class, and wherein said user equipment belonging to said specific class is detected and identified when crossing said border, based on at least one of said unified data repositories.

3. The method according to anyone of the precedent claims, wherein, prior to said border crossing, at least one node of one of said first and second networks is predefined and registered as a federation node, and wherein the first network transmits said application layer information to said federation node, to update the route selection policy of the user equipment with federation related information.

4. The method according to claim 3, when combined with claim 2, wherein said federation node uses at least one of said unified data repositories to detect the user equipment as belonging to said specific class.

5. The method according to anyone of claims 3 and 4, wherein said federation node is a multi-access edge computing node that is deployed between the first and the second network.

6. The method according to anyone of claims 3 to 5, wherein said federation node is a Policy Control Function, PCF, node of the second network.

7. The method according to anyone of claims 3 to 6, wherein said federation node is a Session Management Function, SMF, node of the second network, for a seamless application session roaming.

8. The method according to anyone of the precedent claims, wherein a federated policy control function layer is implemented by delegating said federated policy control function node.

9. The method according to anyone of the precedent claims, wherein said federated policy control function node is a multi-access edge computing node belonging to the second network and is located near said border.

10. The method according to anyone of the precedent claims, wherein said first and second networks are located in distinct respective countries.

11. The method according to anyone of the precedent claims, wherein said user equipment is implanted in a vehicle to implement Vehicle-to-Everything, V2X, applications.

12. Computer program comprising instructions causing the implementation of a method according to any one of the preceding claims when said instructions are executed by a processing circuit.

13. A system to assist a roaming of a user equipment from a first network to a second network, said first and second networks being located in respective regions separated by a border, comprising said user equipment and said first and second networks, said user equipment and said first and second networks being configured for performing the method according to anyone of claims 1 to 11.

14. The system of claim 13, further comprising a federation manager computer entity to store unified data repositories of said first and second networks with identifiers of user equipment belonging to said specific class, to implement the method of claim 2.

15. The system of claim 14, wherein said federation manager computer entity stores data of at least one node of one of said first and second networks as a federation node, to implement the method of claim 3.

## Patentansprüche

1. Verfahren zum Unterstützen eines Roamings eines Benutzergeräts von einem ersten Netzwerk zu einem zweiten Netzwerk, wobei sich das erste und das zweite Netzwerk in jeweiligen Regionen befinden, welche durch eine Grenze getrennt sind,
wobei das Verfahren auf ein Detektieren eines Überquerens der Grenze durch das Benutzergerät hin eine Verwendung durch das zweite Netzwerk von Anwendungsschichtinformationen umfasst, um eine Anwendungsschicht eines Roamings des Benutzergeräts von dem ersten Netzwerk zu dem zweiten Netzwerk zu verarbeiten,
wobei das Benutzergerät an wenigstens eines des ersten und des zweiten Netzwerks ein Signal überträgt, gemäß welchem es zu einer spezifischen Klasse von Benutzergeräten gehört, welche durch einen Verbund von Netzwerken unterstützt werden, welcher wenigstens das erste und das zweite Netzwerk umfasst, um eine Routenauswahlrichtlinie des Benutzergeräts zu aktualisieren, welches als zu der spezifischen Klasse gehörig definiert ist,
wobei die aktualisierte Routenauswahlrichtlinie durch das zweite Netzwerk verwendet wird, um die Anwendungsschicht für das Roaming des Benutzergeräts zu verarbeiten, wodurch das Roaming für das Benutzergerät nahtlos ist,
und wobei:
- vor dem Roaming und wenn das Benutzergerät mit dem ersten Netzwerk verbunden ist, auf einen Empfang des Signals des Benutzergeräts, welches zu der spezifischen Klasse gehört, durch das erste Netzwerk hin das erste Netzwerk die Routenauswahlrichtlinie des Benutzergeräts aktualisiert, um das Benutzergerät als zu der spezifischen Klasse gehörig zu definieren (S1),
- während des Roamings das erste Netzwerk eine Einrichtung eines Verbundrichtliniensteuerungsfunktionsknotens und eines einheitlichen Datenrepositoriums mit dem zweiten Netzwerk auslöst, indem es die Anwendungsschichtinformationen an den Verbundrichtliniensteuerungsfunktionsknoten überträgt (S2), wobei der Verbundrichtliniensteuerungsfunktionsknoten zum Aktualisieren der Routenauswahlrichtlinie des Benutzergeräts in dem zweiten Netzwerk und zum Aktualisieren eines einheitlichen Datenrepositoriums des zweiten Netzwerks delegiert ist,
- wenn sich das Benutzergerät mit dem zweiten Netzwerk verbindet, das zweite Netzwerk das aktualisierte einheitliche Datenrepositorium des zweiten Netzwerks verwendet, um das Benutzergerät als zu der spezifischen Klasse gehörig zu detektieren (S3), und die Anwendungsschichtinformationen und die aktualisierte Routenauswahlrichtlinie des Benutzergeräts in dem zweiten Netzwerk verwendet, um das Roaming für das Benutzergerät zu verarbeiten.

2. Verfahren nach Anspruch 1, wobei vor der Grenzüberquerung einheitliche Datenrepositorien des ersten und des zweiten Netzwerks aktualisiert und mit Kennungen von Benutzergeräten registriert werden, welche zu der spezifischen Klasse gehören, und wobei das Benutzergerät, welches zu der spezifischen Klasse gehört, beim Überqueren der Grenze auf Grundlage wenigstens eines der einheitlichen Datenrepositorien detektiert und identifiziert wird.

3. Verfahren nach einem der vorhergehenden Ansprüche, wobei vor der Grenzüberquerung wenigstens ein Knoten eines des ersten und des zweiten Netzwerks vordefiniert wird und als ein Verbundknoten registriert wird und wobei das erste Netzwerk die Anwendungsschichtinformationen an den Verbundknoten überträgt, um die Routenauswahlrichtlinie des Benutzergeräts mit verbundbezogenen Informationen zu aktualisieren.

4. Verfahren nach Anspruch 3, wenn kombiniert mit Anspruch 2, wobei der Verbundknoten wenigstens eines der einheitlichen Datenrepositorien verwendet, um das Benutzergerät als zu der spezifischen Klasse gehörig zu detektieren.

5. Verfahren nach einem der Ansprüche 3 und 4, wobei der Verbundknoten ein Multi-Access-Edge-Computing-Knoten ist, welcher zwischen dem ersten und dem zweiten Netzwerk eingesetzt wird.

6. Verfahren nach einem der Ansprüche 3 bis 5, wobei der Verbundknoten ein Policy-Control-Function- ,PCF, -Knoten des zweiten Netzwerks ist.

7. Verfahren nach einem der Ansprüche 3 bis 6, wobei der Verbundknoten ein Session-Management-Function-, SMF, -Knoten des zweiten Netzwerks für ein nahtloses Roaming von Anwendungssitzungen ist.

8. Verfahren nach einem der vorhergehenden Ansprüche, wobei eine Verbundrichtliniensteuerungsfunktionsschicht durch Delegieren des Verbundrichtliniensteuerungsfunktionsknotens implementiert wird.

9. Verfahren nach einem der vorhergehenden Ansprüche, wobei der Verbundrichtliniensteuerungsfunktionsknoten ein Multi-Access-Edge-Computing-Knoten ist, welcher zu dem zweiten Netzwerk gehört und sich in der Nähe der Grenze befindet.

10. Verfahren nach einem der vorhergehenden Ansprüche, wobei sich das erste und das zweite Netzwerk in jeweils verschiedenen Ländern befinden.

11. Verfahren nach einem der vorhergehenden Ansprüche, wobei das Benutzergerät in einem Fahrzeug eingebaut ist, um Vehicle-to-Everything-, V2X, -Anwendungen zu implementieren.

12. Computerprogramm, umfassend Anweisungen, welche die Implementierung eines Verfahrens nach einem der vorhergehenden Ansprüche veranlassen, wenn die Anweisungen durch eine Verarbeitungsschaltung ausgeführt werden.

13. System zum Unterstützen eines Roamings eines Benutzergeräts von einem ersten Netzwerk zu einem zweiten Netzwerk, wobei sich das erste und das zweite Netzwerk in jeweiligen Regionen befinden, welche durch eine Grenze getrennt sind, umfassend das Benutzergerät und das erste und das zweite Netzwerk, wobei das Benutzergerät und das erste und das zweite Netzwerk dazu eingerichtet sind, das Verfahren nach einem der Ansprüche 1 bis 11 durchzuführen.

14. System nach Anspruch 13, ferner umfassend eine Verbundmanager-Computereinheit zum Speichern einheitlicher Datenrepositorien des ersten und des zweiten Netzwerks mit Kennungen von Benutzergeräten, welche zu der spezifischen Klasse gehören, um das Verfahren nach Anspruch 2 zu implementieren.

15. System nach Anspruch 14, wobei die Verbundmanager-Computereinheit Daten von wenigstens einem Knoten eines des ersten und des zweiten Netzwerks als einen Verbundknoten speichert, um das Verfahren nach Anspruch 3 zu implementieren.

## Revendications

1. Procédé pour assister une itinérance d'un équipement utilisateur d'un premier réseau vers un deuxième réseau, lesdits premier et deuxième réseaux étant situés dans des régions respectives séparées par une frontière,
le procédé comprenant, lors de la détection d'un franchissement de ladite frontière par l'équipement utilisateur, une utilisation par le deuxième réseau d'informations de couche d'application pour gérer une couche d'application d'une itinérance de l'équipement utilisateur du premier réseau vers le deuxième réseau,
dans lequel l'équipement utilisateur émet à au moins un parmi lesdits premier et deuxième réseaux un signal selon lequel il appartient à une classe spécifique d'équipement utilisateur pris en charge par une fédération de réseaux incluant au moins les premier et deuxième réseaux, de façon à mettre à jour une politique de sélection d'itinéraire de l'équipement utilisateur qui est défini comme appartenant à ladite classe spécifique,
ladite politique de sélection d'itinéraire mise à jour étant utilisée par le deuxième réseau pour gérer ladite couche d'application pour l'itinérance de l'équipement utilisateur, ladite itinérance étant ainsi transparente pour l'équipement utilisateur, et dans lequel :
- préalablement à ladite itinérance et lorsque l'équipement utilisateur est rattaché au premier réseau, lors de la réception par le premier réseau dudit signal de l'équipement utilisateur appartenant à la classe spécifique, le premier réseau met à jour la politique de sélection d'itinéraire de l'équipement utilisateur pour définir l'équipement utilisateur comme appartenant à ladite classe spécifique (S1),
- pendant ladite itinérance, le premier réseau déclenche un établissement d'un nœud de fonction de contrôle de politique fédérée et d'un référentiel de données unifié avec le deuxième réseau en émettant lesdites informations de couche d'application au nœud de fonction de contrôle de politique fédérée (S2), ledit nœud de fonction de contrôle de politique fédérée étant délégué pour mettre à jour la politique de sélection d'itinéraire de l'équipement utilisateur dans le deuxième réseau et pour mettre à jour un référentiel de données unifié dudit deuxième réseau,
- lorsque l'équipement utilisateur se rattache au deuxième réseau, le deuxième réseau utilise ledit référentiel de données unifié mis à jour dudit deuxième réseau pour détecter l'équipement utilisateur comme appartenant à ladite classe spécifique (S3), et utilise lesdites informations de couche d'application et ladite politique de sélection d'itinéraire mise à jour de l'équipement utilisateur dans le deuxième réseau, pour gérer l'itinérance pour ledit équipement utilisateur.

2. Procédé selon la revendication 1, dans lequel, avant ledit franchissement de frontière, des référentiels de données unifiés desdits premier et deuxième réseaux sont mis à jour et enregistrés avec des identifiants d'un équipement utilisateur appartenant à ladite classe spécifique, et dans lequel ledit équipement utilisateur appartenant à ladite classe spécifique est détecté et identifié lors du franchissement de ladite frontière, sur la base d'au moins un parmi lesdits référentiels de données unifiés.

3. Procédé selon l'une quelconque des revendications précédentes, dans lequel, avant ledit franchissement de frontière, au moins un nœud de l'un desdits premier et deuxième réseaux est prédéfini et enregistré comme nœud de fédération, et dans lequel le premier réseau émet lesdites informations de couche d'application audit nœud de fédération, pour mettre à jour la politique de sélection d'itinéraire de l'équipement utilisateur avec des informations liées à la fédération.

4. Procédé selon la revendication 3, lorsqu'elle est combinée avec la revendication 2, dans lequel ledit nœud de fédération utilise au moins un parmi lesdits référentiels de données unifiés pour détecter l'équipement utilisateur comme appartenant à ladite classe spécifique.

5. Procédé selon l'une quelconque des revendications 3 et 4, dans lequel ledit nœud de fédération est un nœud de calcul de périphérie multi-accès qui est déployé entre le premier et le deuxième réseau.

6. Procédé selon l'une quelconque des revendications 3 à 5, dans lequel ledit nœud de fédération est un nœud de fonction de contrôle de politique, PCF, du deuxième réseau.

7. Procédé selon l'une quelconque des revendications 3 à 6, dans lequel ledit nœud de fédération est un nœud de fonction de gestion de session, SMF, du deuxième réseau, pour une itinérance de session d'application transparente.

8. Procédé selon l'une quelconque des revendications précédentes, dans lequel une couche de fonction de contrôle de politique fédérée est implémentée en déléguant ledit nœud de fonction de contrôle de politique fédérée.

9. Procédé selon l'une quelconque des revendications précédentes, dans lequel ledit nœud de fonction de contrôle de politique fédérée est un nœud de calcul périphérique multi-accès appartenant au deuxième réseau et est situé à proximité de ladite frontière.

10. Procédé selon l'une quelconque des revendications précédentes, dans lequel lesdits premier et deuxième réseaux sont situés dans des pays respectifs distincts.

11. Procédé selon l'une quelconque des revendications précédentes, dans lequel ledit équipement utilisateur est implanté dans un véhicule pour implémenter des applications véhicule à X, V2X.

12. Programme d'ordinateur comprenant des instructions entraînant l'implémentation du procédé selon l'une quelconque des revendications précédentes, lorsque lesdites instructions sont exécutées par un circuit de traitement.

13. Système pour assister une itinérance d'un équipement utilisateur d'un premier réseau vers un deuxième réseau, lesdits premier et deuxième réseaux étant situés dans des régions respectives séparées par une frontière, comprenant ledit équipement utilisateur et lesdits premier et deuxième réseaux, ledit équipement utilisateur et lesdits premier et deuxième réseaux étant configurés pour effectuer le procédé selon l'une quelconque des revendications 1 à 11.

14. Système selon la revendication 13, comprenant en outre une entité informatique gestionnaire de fédération pour stocker des référentiels de données unifiés desdits premier et deuxième réseaux avec des identifiants d'un équipement utilisateur appartenant à ladite classe spécifique, pour implémenter le procédé de la revendication 2.

15. Système selon la revendication 14, dans lequel ladite entité informatique gestionnaire de fédération stocke des données d'au moins un nœud de l'un desdits premier et deuxième réseaux en tant que nœud de fédération, pour implémenter le procédé de la revendication 3.
